# EUROPÄISCHE PATENTSCHRIFT

(11) **EP 1 011 188 B1**
(45) Veröffentlichungstag und Bekanntmachung des Hinweises auf die Patenterteilung: **19.03.2003**
(21) Anmeldenummer: 99124610.9
(22) Anmeldetag: 10.12.1999
(51) Int. Cl.: H02K 7/102, F16D 59/02, F16D 55/28

(54) **Elektromotor mit einer integrierten, drehspielfreien, elektromagnetisch betätigten Bremse**
Electrical motor with integrated electromagnetically actuated brake without rotational clearence
Moteur électrique avec frein intégré actionné électromagnétiquement et sans jeu de rotation

(30) Priorität: 16.12.1998 DE 19857950
(43) Veröffentlichungstag der Anmeldung: 21.06.2000
(73) Patentinhaber: ZF FRIEDRICHSHAFEN Aktiengesellschaft, 88038 Friedrichshafen (DE)
(72) Erfinder: Fronius, Helmut, Dipl.-Ing., 88090 Immenstaad (DE)

(56) Entgegenhaltungen:
- EP-A- 0 521 840
- DE-A- 4 109 786
- DE-A- 19 604 712
- FR-A- 2 513 338
- US-A- 3 665 231

## Beschreibung

Die Erfindung betrifft einen Elektromotor mit einer integrierten, drehspielfreien, elektromagnetisch betätigten Bremse nach dem Oberbegriff von Anspruch 1.

Elektromotoren werden in der Technik für sehr verschiedene Aufgaben eingesetzt, u. a. als Servomotoren in Stellantrieben. Bei diesem Einsatz müssen sie höchsten Anforderungen bezüglich Präzision genügen. Sie werden häufig mit drehspielfreien, elektromagnetisch betätigten Bremsen kombiniert, die die Motorwelle abbremsen, um ein Nachlaufen zu verhindern und beim Stillstand des Elektromotors die Position zu halten. Solche Elektromotoren mit Bremsen sind in verschiedenen Varianten auf dem Markt.

Die Varianten unterscheiden sich durch die Art der Bremse und durch ihre Anordnung in Bezug auf die Antriebsseite des Elektromotors. Bei einer Bremsenart ist ein Flansch mit einer axial angeordneten Reibfläche spielfrei auf der Motorwelle befestigt. Auf der Seite der Reibfläche ist eine axial bewegliche Ankerscheibe angeordnet, die eine Gegenreibfläche aufweist und über eine Membran spielfrei mit einem gehäusefesten Elektromagneten verbunden ist. Federn drücken die Reibfläche der Ankerscheibe gegen die Reibfläche des Flansches, wodurch eine kraftschlüssige, spielfreie Verbindung zum Motorgehäuse hergestellt wird.

Um die Bremse zu öffnen, wird eine Magnetspule des Elektromagneten bestromt, so daß die Ankerscheibe entgegen der Kraft der Federn von dem Elektromagneten angezogen wird. Um mit relativ kleinen Elektromagneten große Anziehungskräfte zu erzeugen, ist der axiale Luftspalt zwischen der axial beweglichen Ankerscheibe und dem Flansch sehr klein, in der Regel wenige Zehntelmillimeter. Die zulässigen Einbautoleranzen sind darüber hinaus noch deutlich kleiner. Daher wird die Bremse üblicherweise an einem Festlager der Motorwelle positioniert, die an ihrem anderen Ende in einem Loslager gelagert ist. Ein Festlager ist ein im Gehäuse axial festgelegtes Lager, während ein Loslager ein im Gehäuse axial verschiebbares Lager ist und somit ungleiche Wärmedehnungen zwischen der Welle und dem Gehäuse ausgleichen kann.

Aus antriebstechnischen Gründen ist es häufig zweckmäßig, das Festlager auf der Antriebsseite des Elektromotors anzuordnen und das Loslager am entgegengesetzten Ende der Motorwelle. Allerdings ist es vorteilhaft, die Bremse an diesem Ende vorzusehen, um sie leichter warten zu können. Bisher wurde entweder das Festlager mit der Bremse auf der Antriebsseite des Elektromotors oder auf der entgegengesetzten Seite angeordnet.

Der Erfindung liegt die Aufgabe zugrunde, bei einem Elektromotor der eingangs beschriebenen Art eine Anordnung eines Festlagers auf der Antriebsseite und gleichzeitig eine Anordnung einer Bremse auf der entgegengesetzten Seite des Elektromotors zu ermöglichen. Sie wird gemäß der Erfindung durch die Merkmale des Anspruchs 1 gelöst. Weitere Ausgestaltungen ergeben sich aus den Unteransprüchen.

Nach der Erfindung ist der Magnetkörper der elektromagnetisch betätigten Bremse über eine Ringfeder mit dem Motorgehäuse verbunden, die über ihren Umfang verteilt teilweise an dem Magnetkörper und teilweise an dem Motorgehäuse befestigt ist. Dabei stützt sich der Magnetkörper unter der Vorspannung der Ringfeder an einem äußeren Lagerring des Wälzlagers ab, dessen innerer Lagerring sich axial nach außen an der Motorwelle abstützt. Die Ringfeder stellt eine drehspielfreie Verbindung zwischen dem Magnetkörper und dem Motorgehäuse her, die allerdings eine axiale Bewegung des Magnetkörpers zum Motorgehäuse zuläßt.

Um eine präzise Stellung des Magnetkörpers zum Flansch zu erhalten, wird das als Loslager ausgebildete Wälzlager durch die Ringfeder über den Magnetkörper und die Motorwelle gegen das Festlager vorgespannt, so daß kein axiales Lagerspiel auftritt. Ist die Magnetspule durchflutet, wirkt die Vorspannung der Ringfeder allein, da die Magnetkräfte innerhalb der Bremse die Federkräfte ausgleichen und keine äußeren Kräfte von der Bremse auf die Lager wirken. Ist die Magnetspule nicht bestromt, wirken die Federkräfte über den Magnetkörper in die gleiche Richtung wie die Vorspannkraft der Ringfeder, so daß die Vorspannung verstärkt wird. Dadurch ist gewährleistet, daß in allen Betriebsbereichen eine ausreichende Vorspannung und Spielfreiheit gegeben ist.

Um die Montage und Wartung der Bremse zu erleichtern, ist es zweckmäßig, das als Loslager ausgebildete Wälzlager in einen Lagerdeckel oder Lagerschild des Motorgehäuses einzusetzen und die Ringfeder an dem gleichen Bauteil zu befestigen. Ferner wird die Montage der Bremse dadurch vereinfacht, daß die Ringfeder am Magnetkörper angeschraubt ist und der Lagerdeckel entsprechende Montageöffnungen für die Schrauben hat.

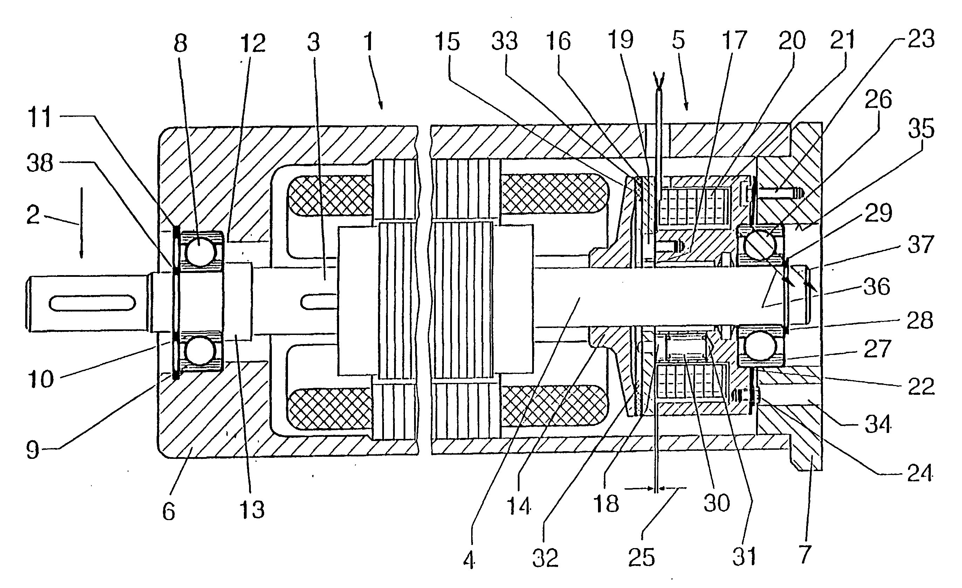

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt einen Längsschnitt durch einen erfindungsgemäßen Elektromotor.

Der Elektromotor 1 besitzt ein Motorgehäuse 6, in dem eine Motorwelle 3 an einer Antriebsseite 2 durch ein als Festlager ausgebildetes Kugellager 8 und an der entgegengesetzten Seite durch ein als Loslager ausgebildetes Wälzlager 26 gelagert ist. Ein äußerer Lagerring 9 des Kugellagers 8 ist zwischen einem Gehäusebund 12 und einem Sicherungsring 11 im Motorgehäuse 6 axial festgelegt. Ein innerer Lagerring 10 des Kugellagers 8 ist innen zwischen einem Sicherungsring 38 und einem Wellenbund 13 der Motorwelle 3 axial festgelegt.

Das Wälzlager 26 ist in eine Lageröffnung 35 eines Lagerdeckels 7 des Motorgehäuses 6 axial verschiebbar eingesetzt. Sein äußerer Lagerring 27 zentriert radial einen Magnetkörper 21 einer elektromagnetisch betätigten Bremse 5 gegenüber der Lageröffnung 35. Der Magnetkörper 21, der eine Magnetspule 20 umfaßt, ist über eine Ringfeder 22 axial beweglich, aber drehspielfrei mit dem Lagerdeckel 7 verbunden, indem die Ringfeder 22 einerseits durch Schrauben 23 mit dem Lagerdeckel 7 und durch Schrauben 24 mit dem Magnetkörper 21 verschraubt ist. Zur einfachen Montage der Bremse 5 sind die Schrauben 24 durch Montageöffnungen 34 in dem Lagerdeckel 7 zugänglich.

Der innere Lagerring 28 des Wälzlagers 26 stützt sich axial nach außen über einen Sicherungsring 29 an der Motorwelle 3 ab. Da die Ringfeder 22 mit einer Vorspannung montiert wird, übt der Magnetkörper 21 über den äußeren Lagerring 27 des Wälzlagers 26 eine Vorspannkraft 36 auf die Motorwelle 3 aus, die sich über den Sicherungsring 38 und über das Kugellager 8 an dem Gehäusebund 12 abstützt. Dadurch sind die beiden Lager 8 und 26 axial spielfrei zueinander verspannt.

Auf der dem Wälzlager 26 abgewandten Seite des Magnetkörpers 21 ist ein Flansch 14 spielfrei auf einer Verlängerung 4 der Motorwelle 3 befestigt. Er hat an einer Stirnseite einen Bremsbelag 15, der eine zum Magnetkörper 21 hinweisende Reibfläche bildet. Zwischen dem Flansch 14 und dem Magnetkörper 21 ist eine axiale bewegliche Ankerscheibe 16 vorgesehen, die an ihrer zum Flansch 14 hinweisenden Stirnfläche 32 eine Reibfläche 33 aufweist, die mit dem Bremsbelag 15 zusammenwirkt, um eine kraftschlüssige Verbindung herzustellen. Eine Membran 17 verbindet die Ankerscheibe 16 drehspielfrei mit dem Magnetkörper 21, indem sie mittels Schrauben 19 mit dem Magnetkörper 21 und mittels Schrauben 18 mit der Ankerscheibe 16 verschraubt ist.

Federn 30, die in Bohrungen 31 des Magnetkörpers 21 untergebracht sind, drücken die Ankerscheibe 16 mit ihrer Reibfläche 33 gegen den Bremsbelag 15 auf den Flansch 14, so daß die Bremse 5 durch die Kraft der Federn 30 bei stromloser Magnetspule 20 geschlossen ist. Die Kraft 37 der Federn 30, die sich bei geschlossener Bremse 5 einerseits über den Flansch 14 an der Motorwelle 3 und andererseits über den Magnetkörper 21 am äußeren Lagerring 27 des Wälzlagers 26 abstützen, wirkt am Wälzlager 26 in der gleichen Weise wie die durch die Ringfeder 22 erzeugte Vorspannkraft 36, so daß die durch die Ringfeder 22 erzeugte Verspannung zwischen dem Kugellager 8 und dem Wälzlager 26 erhalten bleibt.

Wird die Magnetspule 20 bestromt, wird die Ankerscheibe 16 vom Magnetkörper 21 angezogen und die Reibfläche 33 vom Bremsbelag 15 um ein Spiel 25 gelüftet, das in geschlossenem Zustand der Bremse 5 zwischen der Ankerscheibe 16 und dem Magnetkörper 21 vorhanden ist. Dieses Spiel 25 beträgt in der Regel zwischen 0,1 und 0,5 Millimeter.

### Bezugszeichen

- 1: Elektromotor
- 2: Antriebsseite
- 3: Motorwelle
- 4: Verlängerung
- 5: Bremse
- 6: Motorgehäuse
- 7: Lagerdeckel
- 8: Kugellager
- 9: äußerer Lagering
- 10: innerer Lagering
- 11: Sicherungsring
- 12: Gehäusebund
- 13: Wellenbund
- 14: Flansch
- 15: Bremsbelag
- 16: Ankerscheibe
- 17: Membran
- 18: Schraube
- 19: Schraube
- 20: Magnetspule
- 21: Magnetkörper
- 22: Ringfeder
- 23: Schraube
- 24: Schraube
- 25: Spiel
- 26: Wälzlager
- 27: äußerer Lagering
- 28: innerer Lagering
- 29: Sicherungsring
- 30: Feder
- 31: Bohrung
- 32: Stirnfläche
- 33: Reibfläche
- 34: Montageöffnung
- 35: Lageröffnung
- 36: Vorspannkraft
- 37: Kraft
- 38: Sicherungsring

## Patentansprüche

1. Elektromotor (1) mit einer integrierten, drehspielfreien, elektromagnetisch betätigten Bremse (5), die auf einer Verlängerung (4) einer Motorwelle (3) an dem der Antriebsseite (2) gegenüberliegenden Ende angeordnet ist, das in einem Motorgehäuse (6) über ein als Loslager ausgebildetes Wälzlager (26) gelagert ist, während die Motorwelle (3) auf der Antriebsseite (2) in einem Festlager (8) gelagert ist, wobei zwischen einem eine Magnetspule (20) umfassenden, mit dem Motorgehäuse (6) verbundenen Magnetkörper (21) und einem auf der Motorwelle (3) befestigten Flansch (14) eine Ankerscheibe (16) vorgesehen ist, die an einer axialen Stirnfläche (32) eine Reibfläche (33) hat, von Federn (30) gegen eine Reibfläche (15) am Flansch (14) gepreßt und mit dem Magnetkörper (21) drehspielfrei, aber axial beweglich verbunden ist, **dadurch gekennzeichnet, daß** der Magnetkörper (21) über eine Ringfeder (22) mit dem Motorgehäuse (6) verbunden ist, die über ihren Umfang verteilt teilweise an dem Magnetkörper (21) und teilweise an dem Motorgehäuse (6) befestigt ist, und daß der Magnetkörper (21) unter einer Vorspannung der Ringfeder (22) an einem äußeren Lagering (27) des Wälzlagers (26) anliegt, dessen innerer Lagerring (28) sich axial nach außen an der Motorwelle (3) abstützt.

2. Elektromotor (1) nach Anspruch 1, **dadurch gekennzeichnet, daß** das Wälzlager (26) in einen Lagerdeckel (7) des Motorgehäuses (6) eingesetzt ist und die Ringfeder (22) an dem Lagerdeckel (7) befestigt ist.

3. Elektromotor (1) nach Anspruch 2, **dadurch gekennzeichnet, daß** die Ringfeder (22) am Magnetkörper (21) angeschraubt ist und der Lagerdeckel (7) Montageöffnungen (34) für Schrauben (24) hat.

## Claims

1. Electric motor (1) with an integrated, backlash-free, electromagnetically-operated brake (5), which is arranged on an extension (4) of a motor shaft (3) at the opposite end of the input side (2), with this end of the motor shaft inside an engine housing (6)being supported by a roller bearing (26) forming a floating bearing, whereas the motor shaft (3) is supported by a fixed-seat bearing (8) on the input side (2), whereby an armature disk (16) is provided between a magnet body(21) connected to the engine housing (6)and comprising a magnetic coil (20) and a flange (14) mounted to the motor shaft (3), with the armature disk having a friction face (33) on an axial face end (32), and being pressed by springs (30)against a friction face (15) on the flange (14) and being connected with the magnet body (21) in a backlash-free but axially moveable manner, **characterized in that** the magnet body (21) is connected with the engine housing (6) via an annular spring (22), whose periphery is fixed partly to the magnet body (21) and partly to the motor housing (6), and that the magnet body (21), by means of a preloaded annular ring (22)is pressed against an outer bearing race (27) of the roller bearing (26), whose inner race (28) is supported on the motor shaft (3) in an outward axial direction.

2. Electric motor (1) according to claim 1, **characterized in that** the roller bearing (26)is supported in a bearing cover (7) of the motor housing (6)and the annular spring (22) is fixed to the bearing cover (7).

3. Electric motor (1) according to claim 2, **characterized in that** the annular spring (22) is screwed to the magnet body (21) and the bearing cover (7) is provided with assembly openings (34) for the bolts (24).

## Revendications

1. Moteur électrique (1) doté d'un frein à actionnement électromagnétique (5) intégré et sans jeu en rotation, le frein étant disposé sur un prolongement (4) d'un arbre du moteur (3) de l'extrémité opposée au côté entrée (2), l'extrémité étant logée dans un carter moteur (6) au moyen d'un palier à roulement (26) conçu comme palier libre, tandis que l'arbre du moteur (3) est logé, du côté entrée (2), dans un palier fixe (8), sachant que entre un corps magnétique (21) comprenant une bobine magnétique (20) et lié au carter moteur (6) et une bride (14) fixée sur l'arbre du moteur (3) est prévu un disque d'induit (16), dont une surface frontale (32) comporte une surface de friction (33), le disque d'induit (16) étant pressé au moyen de ressorts (30) contre une surface de friction (15) sur la bride (14) et étant lié avec le corps magnétique (21) en absence de jeu en rotation, mais étant toutefois déplaçable axialement, **caractérisé en ce que** le corps magnétique (21) est lié à l'aide d'un anneau-ressort (22) au carter du moteur (6), l'anneau-ressort (22) étant fixé sur son pourtour en partie au corps magnétique (21) et en partie au carter du moteur (6), et **en ce que** le corps magnétique (21) plaque - l'anneau-ressort (22) étant sous précontrainte - contre une bague de palier extérieure (27) du palier à roulement (26), dont la bague de roulement intérieure (28) appuie en sens axial vers l'extérieur sur l'arbre du moteur (3).

2. Moteur électrique (1) selon la revendication 1, **caractérisé en ce que** le palier à roulement (26) est monté dans un couvercle de palier (7) du carter du moteur (6) et **en ce que** l'anneau-ressort (22) est fixé sur le couvercle de palier (7).

3. Moteur électrique (1) selon la revendication 2, **caractérisé en ce que** l'anneau-ressort (22) est vissé sur le corps magnétique (21) et **en ce que** le couvercle de palier (7) comporte des orifices de montage (34) de vis (24).
